# EUROPEAN PATENT APPLICATION

(11) **EP 4 738 925 A1**
(43) Date of publication of application: **06.05.2026**
(21) Application number: 23942771.9
(22) Date of filing: 27.06.2023
(51) Int. Cl.: H04W 36/08

(54) **NETWORK SWITCHING METHOD AND APPARATUS, COMMUNICATION DEVICE, COMMUNICATION SYSTEM, AND STORAGE MEDIUM**

(71) Applicant: Beijing Xiaomi Mobile Software Co., Ltd., Beijing 100085 (CN)
(72) Inventor: LAI, Qingyu, Beijing 100085 (CN); ZHANG, Huilong, Beijing 100085 (CN); ZHU, Yajun, Beijing 100085 (CN)
(74) Representative: Stöckeler, Ferdinand
(86) International application number: PCT/CN2023/102961
(87) International publication number: WO 2025/000247

(57) **Abstract**

The present disclosure provides a network switching method and apparatus, a device, and a storage medium. The method comprises: a terminal receives first information sent by a first network device, the first information being used to indicate cell information of one or more second network devices. Network types covered by the first network device and the second network devices are different, and the terminal can switch between cells having different network types, thereby improving continuity of service.

## Description

### TECHNICAL FIELD

The disclosure relates to the field of wireless communication technologies, and in particular to a method and an apparatus for network handover, a communication device, a communication system, and a storage medium.

### BACKGROUND

Non-terrestrial network (NTN) communication is an important technology introduced in fifth generation (5G) mobile communication technology, providing wireless resources via satellites or drones rather than terrestrial base stations. The combination of an NTN communication system and a terrestrial network (TN) communication system may extend coverage for the TN communication system, provide emergency communications, offer specific industry applications, and truly realize intelligent connectivity of everything. However, current TNs and NTNs are relatively independent, failing to achieve true mutual integration, thus the service continuity needs to be improved.

### SUMMARY

The disclosure provides a method and an apparatus for network handover, a communication device, a communication system, and a storage medium.

According to a first aspect of embodiments of the disclosure, a method for network handover is provided. The method includes: receiving first information sent from a first network device, in which the first information indicates cell information of one or more second network devices, and a network type covered by the first network device is different from a network type covered by the second network device.

This achieves handover performed by the terminal between cells of different network types and improves service continuity.

According to a second aspect of embodiments of the disclosure, a method for network handover is provided. The method includes: sending first information to a terminal, in which the first information indicates cell information of one or more second network devices, and a network type covered by the first network device is different from a network type covered by the second network device.

According to a third aspect of embodiments of the disclosure, a first terminal is provided. The first terminal includes: a transceiver module, configured to receive first information sent from a first network device, in which the first information indicates cell information of one or more second network devices, and a network type covered by the first network device is different from a network type covered by the second network device.

According to a fourth aspect of embodiments of the disclosure, a first network device is provided. The first network device includes: a transceiver module, configured to send first information to a terminal, in which the first information indicates cell information of one or more second network devices, and a network type covered by the first network device is different from a network type covered by the second network device.

According to a fifth aspect of embodiments of the disclosure, a communication device is provided. The communication device includes: a transceiver; a memory; and a processor respectively connected to the transceiver and the memory, configured to control wireless signal transmission and reception of the transceiver by executing computer-executable instructions stored in the memory, and enable the method according to the first aspect and the method according to the second aspect to be realized.

According to a sixth aspect of embodiments of the disclosure, a computer storage medium is provided. The computer storage medium stores computer-executable instructions which, when executed by a processor, enable the method according to the first aspect and the method according to the second aspect to be implemented.

According to a seventh aspect of embodiments of the disclosure, a communication system is provided. The communication system includes a terminal, configured to perform the method according to the first aspect, and a first network device, configured to perform the method according to the second aspect.

### BRIEF DESCRIPTION OF THE DRAWINGS

The above-mentioned and/or additional aspects and advantages of the disclosure will become apparent and readily appreciated from the following description of embodiments in conjunction with the accompanying figures.
FIG. 1a to FIG. 1b are schematic diagrams illustrating an architecture of a communication system according to an embodiment of the disclosure.
FIG. 2 is a schematic diagram illustrating interaction in a method for network handover according to an embodiment of the disclosure.
FIG. 3a to FIG. 3b are flowcharts illustrating a method for network handover according to another embodiment of the disclosure.
FIG. 4a to FIG. 4b are flowcharts illustrating a method for network handover according to another embodiment of the disclosure.
FIG. 5 is a flowchart illustrating a method for network handover according to another embodiment of the disclosure.
FIG. 6 is a flowchart illustrating a method for network handover according to another embodiment of the disclosure.
FIG. 7a is a block diagram illustrating a first apparatus for network handover according to an embodiment of the disclosure.
FIG. 7b is a block diagram illustrating a second apparatus for network handover according to an embodiment of the disclosure.
FIG. 8a is a block diagram illustrating a communication device according to an embodiment of the disclosure.
FIG. 8b is a block diagram illustrating a chip according to an embodiment of the disclosure.

### DETAILED DESCRIPTION

The method of the disclosure may be used to solve the technical problem of "how to achieve handover of a terminal between a non-terrestrial network (NTN) and a terrestrial network (TN)".

Embodiments of the disclosure provide a method and an apparatus for network handover, a communication device, a communication system, and a storage medium.

In a first aspect, embodiments of the disclosure provide a method for network handover. The method includes: receiving first information sent from a first network device, in which the first information indicates cell information of one or more second network devices, and a network type covered by the first network device is different from a network type covered by the second network device.

In the above embodiment, the terminal receives the cell information of one or more second network devices prepared by the first network device as candidate cell information, and the terminal may select a target cell for handover from candidate cells, thus the terminal may perform handover between cells of different network types, improving service continuity.

In some embodiments, the first network device is an NTN device, the second network device is a TN device, and the first information includes at least one of: a cell identifier of the TN device, an access threshold of the TN device, or a type of measurement to be performed on the TN device.

In the above embodiment, the NTN device to which the terminal is connected prepares cell information of one or more TN devices for the terminal to monitor and select, so that the TN may become a target radio access type (RAT) for handover of the terminal from the NTN, thus enabling the terminal to handover from the NTN to the TN, achieving mutual integration of the NTN and the TN and improving service continuity.

In some embodiments, the first network device is a TN device, the second network device is an NTN device, and the first information includes at least one of: a satellite identifier of the NTN device, ephemeris information of the NTN device, an access threshold of the NTN device, or a type of measurement to be performed on the NTN device.

In the above embodiment, the TN device to which the terminal is connected prepares cell information of one or more NTN devices for the terminal to monitor and select, so that the NTN may become a target RAT for handover of a terminal from the TN, thus enabling the terminal to handover from the TN to the NTN, achieving mutual integration of the NTN and the TN and improving service continuity.

In some embodiments, the method further includes: receiving second information sent from the first network device, in which the second information includes configuration information for the terminal to perform measurement on the second network device; obtaining a measurement result of the second network device by performing measurement on the second network device based on the second information; and sending the measurement result to the first network device.

In the above embodiment, the terminal is enabled to perform measurement on the second network device based on measurement configuration information sent from the first network device, so as to determine whether a cell of the second network device is capable of serving as the candidate cell.

In some embodiments, the method further includes: determining, based on the first information, a target network device from the one or more second network devices.

In the above embodiment, the terminal determines a cell of a target second network device to be handed over from cells of candidate second network devices prepared by the first network device, thus achieving handover performed by the terminal between cells of different network types and improving service continuity.

In some embodiments, the method further includes: disconnecting a communication connection with the first network device, and establishing a communication connection with the target network device.

In the above embodiment, after determining the target cell, the terminal disconnects from the cell of the first network device and establishes a communication connection with the cell of the second network device, thus achieving handover performed by the terminal between cells of different network types and improving service continuity.

In a second aspect, embodiments of the disclosure provide a method for network handover. The method includes: sending first information to a terminal, in which the first information indicates cell information of one or more second network devices, and a network type covered by the first network device is different from a network type covered by the second network device.

In the above embodiment, the first network device prepares the cell information of one or more second network devices as candidate cell information for the terminal and provides the candidate cell information for the terminal to monitor and select, thus enabling the terminal to perform handover between cells of different network types and improving service continuity.

In some embodiments, the first network device is an NTN device, the second network device is a TN device, and the first information includes at least one of: a cell identifier of the TN device, an access threshold of the TN device, or a type of measurement to be performed on the TN device.

In the above embodiment, the NTN device to which the terminal is connected prepares cell information of one or more TN devices for the terminal to monitor and select, so that the TN may become a target RAT for handover of the terminal from the NTN, thus enabling the terminal to handover from the NTN to the TN, achieving mutual integration of the NTN and the TN and improving service continuity.

In some embodiments, the first network device is a TN device, the second network device is an NTN device, and the first information includes at least one of: a satellite identifier of the NTN device, ephemeris information of the NTN device, an access threshold of the NTN device, or a type of measurement to be performed on the NTN device.

In the above embodiment, the TN device to which the terminal is connected prepares cell information of one or more NTN devices for the terminal to monitor and select, so that the NTN may become a target RAT for handover of a terminal from the TN, thus enabling the terminal to handover from the TN to the NTN, achieving mutual integration of the NTN and the TN and improving service continuity.

In some embodiments, the method further includes: sending second information to the terminal, in which the second information includes configuration information for the terminal to perform measurement on the second network device; and receiving a measurement result sent from the terminal, in which the measurement result is obtained by the terminal performing measurement on the second network device based on the second information.

In the above embodiment, the first network device sends measurement configuration information to the terminal, thus the terminal may perform measurement on the second network device; the first network device receives the measurement result sent from the terminal, and prepares one or more candidate cells of the second network device for the terminal based on the measurement result, thus enabling the terminal to perform handover between cells of different network types and improving service continuity.

In some embodiments, the method further includes: determining a link state between the first network device and the terminal.

In the above embodiment, the first network device determines the link state with the terminal, and decides whether to send a conditional handover request to the second network device based on the link state with the terminal and the measurement result of the second network device by the terminal, clarifying a signaling interaction process for handover of the terminal between cells of different network types, thus achieving handover performed by the terminal between cells of different network types and improving service continuity.

In some embodiments, the method further includes: sending a first request to the second network device, in which the first request indicates the second network device to perform admission control for a conditional handover and to allocate resources for the terminal.

In the above embodiment, the first network device sends a conditional handover request to the second network device, indicating the second network device to perform the admission control for the conditional handover and to allocate the resources for the terminal, so as to prepare for the terminal to hand over to the second network device, clarifying a signaling interaction process between the first network device and the second network device, thus achieving handover performed by the terminal between cells of different network types and improving service continuity.

In some embodiments, the method further includes: receiving third information sent from the second network device, in which the third information indicates a result of the admission control for the conditional handover performed by the second network device, and the third information includes cell information of the second network device permitted to be accessed by the terminal.

In the above embodiment, the first network device sends the conditional handover request to the second network device, indicating the second network device to perform the admission control for the conditional handover, and receives the result of the admission control for the conditional handover performed by the second network device, clarifying the signaling interaction process between the first network device and the second network device, thus achieving handover performed by the terminal between cells of different network types and improving service continuity.

In some embodiments, the method further includes: receiving fourth information sent from a target network device, in which the target network device is determined by the terminal from the one or more second network devices, and the fourth information indicates the first network device to release resources for communication with the terminal.

In the above embodiment, the terminal determines the target network device from the one or more second network devices for the conditional handover; after the conditional handover is completed, the first network device receives the fourth information from the target network device and releases resources for communication with the terminal, clarifying a signaling interaction process between the first network device and the target network device, thus achieving handover performed by the terminal between cells of different network types and improving service continuity.

In some embodiments, the method further includes: sending fifth information to a third network device, in which the third network device is a second network device other than the target network device, and the fifth information indicates the third network device to release reserved resources.

In the above embodiment, after the terminal hands over from the first network device to the target network device, the first network device sends the fifth information to the third network device, indicating the third network device to release the reserved resources, clarifying a signaling interaction process between the first network device and the second network device other than the target network device, thus achieving handover performed by the terminal between cells of different network types and improving service continuity.

In a third aspect, embodiments of the disclosure provide a terminal. The terminal includes: a transceiver module, configured to receive first information sent from a first network device, in which the first information indicates cell information of one or more second network devices, and a network type covered by the first network device is different from a network type covered by the second network device.

In a fourth aspect, embodiments of the disclosure provide a first network device. The first network device includes: a transceiver module, configured to send first information to a terminal, in which the first information indicates cell information of one or more second network devices, and a network type covered by the first network device is different from a network type covered by the second network device.

In a fifth aspect, embodiments of the disclosure provide a communication device. The communication device includes: one or more processors and one or more memories storing instructions. The processor is configured to call the instructions and cause the communication device to implement the method for network handover in the first aspect, the method for network handover in the second aspect, and the methods for network handover in optional implementations of the first aspect and the second aspect.

In a sixth aspect, embodiments of the disclosure provide a storage medium. The storage medium stores instructions that, when executed on a communication device, cause the communication device to implement the method for network handover in the first aspect, the methods for network handover in optional implementations of the first aspect, the method for network handover in the second aspect, and the methods for network handover in optional implementations of the second aspect.

In a seventh aspect, an embodiment of the disclosure provides a communication system. The communication system includes: a terminal, configured to implement the method of the first aspect, and a first network device, configured to implement the method of the second aspect.

In the above embodiment, a communication system is provided. In the communication system, the terminal may perform handover between cells of different network types, thus improving service continuity.

In some embodiments, the communication system further includes a second network device.

In some embodiments, the second network device is configured to perform: receiving a first request sent from the first network device; and based on the first request, performing admission control for conditional handover and allocating resources for the terminal.

In the above embodiment, the first network device sends the first request to the second network device; the second network device receives the first request sent from the first network device and, based on the first request, performs the admission control for the conditional handover and allocates resources for the terminal, clarifying a signaling interaction process between the first network device and the second network device, thus achieving handover performed by the terminal between cells of different network types and improving service continuity.

In some embodiments, the second network device is configured to perform: sending third information to the first network device, in which the third information indicates a result of the admission control for the conditional handover performed by the second network device, and the third information includes cell information of the second network device permitted to be accessed by the terminal.

In the above embodiment, the first network device sends a conditional handover request to the second network device, instructing the second network device to perform the admission control for the conditional handover; the second network device performs the admission control for the conditional handover and sends the third information to the first network device, indicating the result of the admission control for the conditional handover performed by the second network device, clarifying a signaling interaction process between the first network device and the second network device, thus achieving handover performed by the terminal between cells of different network types and improving service continuity.

In some embodiments, the second network device, as a target network device, is configured to perform: sending fourth information to the first network device, in which the target network device is determined by the terminal from the one or more second network devices, and the fourth information indicates the first network device to release resources for communication with the terminal.

In the above embodiment, the terminal determines the target network device from the one or more second network devices for the conditional handover; after the conditional handover is completed, the target network device sends the fourth information to the first network device; the first network device receives the fourth information and releases resources for communication with the terminal, clarifying a signaling interaction process between the first network device and the target network device, thus achieving handover performed by the terminal between cells of different network types and improving service continuity.

In some embodiments, the second network device, as a third network device, is configured to perform: receiving fifth information sent from the first network device; and releasing reserved resources based on the fifth information, in which the third network device is a second network device other than the target network device.

In the above embodiment, after the terminal hands over from the first network device to the target network device, the first network device sends the fifth information to the third network device; the third network device receives the fifth information and releases the reserved resources, clarifying a signaling interaction process between the first network device and the second network device other than the target network device, thus achieving handover performed by the terminal between cells of different network types and improving service continuity.

In an eighth aspect, the embodiments of the disclosure provide a program product. When the program product is executed by a communication device, the communication device is caused to implement the method for network handover in the first aspect, the methods for network handover in optional implementations of the first aspect, the method for network handover in the second aspect, and the methods for network handover in optional implementations of the second aspect.

In a ninth aspect, the embodiments of the disclosure provide a computer program. When the computer program is running on a computer, the computer is caused to implement the method for network handover in the first aspect, the methods for network handover in optional implementations of the first aspect, the method for network handover in the second aspect, and the methods for network handover in optional implementations of the second aspect.

In a tenth aspect, the embodiments of the disclosure provide a chip or chip system. The chip or chip system includes a processing circuit, configured to implement the methods for network handover in optional implementations of the first aspect, and the methods for network handover in optional implementations of the second aspect.

It may be understood that terminal, the first network device, the communication device, the communication system, the storage medium, the program product, and the computer program are all used to implement the method in the embodiments of the disclosure. Thus, regarding beneficial effects they may achieve, reference may made be to the beneficial effects in the corresponding methods, which is not repeated herein.

The embodiments of the disclosure provide a method for network handover. In some embodiments, terms such as "method for network handover", "method for information processing", and "communication method" may be used interchangeably, terms such as "apparatus for information transmitting", "apparatus for information processing", and "communication apparatus" may be used interchangeably, and terms such as "information processing system", and "communication system" may be used interchangeably.

The embodiments of the disclosure are not exhaustive, but are only illustrative, and are not intended to be a specific limitation on the protection scope of the disclosure. In the absence of contradiction, each step in a certain embodiment may be implemented as an independent embodiment, and respective steps may be arbitrarily combined. For example, a solution after removing some steps in a certain embodiment may also be implemented as an independent embodiment, and the order of the steps in a certain embodiment may be arbitrarily exchanged. In addition, the optional implementations in a certain embodiment may be arbitrarily combined. In addition, respective embodiments may be arbitrarily combined, for example, part of or all steps of different embodiments may be arbitrarily combined, and a certain embodiment may be arbitrarily combined with the optional implementations of other embodiments.

In each embodiment of the disclosure, unless otherwise specified or there is a logical conflict, the terms and/or descriptions between the embodiments are consistent and may be referred to each other, and the technical features in different embodiments may be combined to form a new embodiment based on their internal logical relationships.

The terms used in the embodiments of the disclosure are only for the purpose of describing specific embodiments and are not intended to limit the disclosure.

In the embodiments of the disclosure, unless otherwise specified, elements expressed in the singular form, such as "a", "an", "the", "above", "said", "aforementioned", "this", etc., may mean "one and only one", or "one or more", "at least one", etc. For example, when using articles such as "a", "an", "the" in English translation, the noun following the article may be understood as a singular expression or a plural expression.

In the embodiments of the disclosure, "a plurality of" refers to two or more.

In some embodiments, the terms "at least one of", "one or more", "a plurality of", "multiple" etc. may be used interchangeably.

In the embodiments of the disclosure, the descriptions such as "at least one of A, B", "A and/or B", "in one case, A; in another case, B", "in response to one case, A; in response to another case, B", etc. may include the following technical solutions: in some embodiments, A (A is executed independently of B); in some embodiments, B (B is executed independently of A); in some embodiments, one is selected from A and B for execution (A and B are selectively executed); in some embodiments, A and B (both A and B are executed). When there are more branches such as A, B, C, etc., the above is applicable.

In some embodiments, the descriptions such as "A or B", etc. may include the following technical solutions: in some embodiments, A (A is executed independently of B); in some embodiments, B (B is executed independently of A); in some embodiments, one is selected from A and B for execution (A and B are selectively executed). When there are more branches such as A, B, C, etc., the above is applicable.

The prefixes such as "first" and "second" in the embodiments of the disclosure are only used to distinguish different descriptive objects, and do not constitute restrictions on the position, order, priority, quantity or content of the descriptive objects. For the statement of the descriptive objects, reference may be made to the description in the context of the claims or embodiments, and it should not constitute redundant restrictions due to the use of prefixes. For example, if the descriptive object is "field", the ordinal number before the "field" in the "first field" and the "second field" does not limit the position or order between the "fields", and the terms "first" and "second" do not limit whether the "fields" they modify are in the same message, nor do they limit the order of the "first field" and the "second field". For another example, if the descriptive object is "level", the ordinal number before the "level" in the "first level" and the "second level" does not limit the priority between the "levels". For another example, a number of descriptive objects is not limited by the ordinal number, and may be one or more. Taking the "first apparatus" as an example, a number of "apparatuses" may be one or more. In addition, the objects modified by different prefixes may be the same or different. For example, if the descriptive object is "an apparatus", then the "first apparatus" and the "second apparatus" may be the same apparatus or different apparatuses, and their types may be the same or different. For another example, if the descriptive object is "information", then the "first information" and the "second information" may be the same information or different information, and their contents may be the same or different.

In some embodiments, "including A", "including A", "used to indicate A", and "carrying A" may be interpreted as directly carrying A or indirectly indicating A.

In some embodiments, the terms such as "in response to...", "in response to determining...", "in the case of/that...", "at the time of...", "when...", "if...", "in case of/that...", etc. may be used interchangeably.

In some embodiments, the terms such as "greater than", "greater than or equal to", "not smaller than", "more than", "more than or equal to", "not less than", "higher than", "higher than or equal to", "not lower than", and "above" may be used interchangeably, and the terms such as "smaller than", "smaller than or equal to", "not greater than", "less than", "less than or equal to", "no more than", "lower than", "lower than or equal to", "not higher than", and "below" may be replaced with each other.

In some embodiments, the apparatus, etc. may be interpreted as physical or virtual, and their names are not limited to the names recorded in the embodiments. The terms such as "apparatus", "equipment", "device", "circuit", "network element", "node", "function", "unit", "section", "system", "network", "chip", "chip system", "entity", and "subject" may be used interchangeably.

In some embodiments, the term such as "network" may be interpreted as an apparatus (e.g., an access network device, a core network device, etc.) included in the network.

In some embodiments, the terms such as "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "carrier", "component carrier", "bandwidth part (BWP)" and the like may be used interchangeably.

In some embodiments, the terms such as "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client" and the like may be used interchangeably.

In some embodiments, the access network device, the core network device, or the network device may be replaced by the terminal. For example, various embodiments of the disclosure may also be applied to a structure in which communication between the access network device, the core network device, or the network device and the terminal is replaced by communication between multiple terminals (for example, device-to-device (D2D), vehicle-to-everything (V2X), etc.). In this case, the terminal may be set to have a structure that has all or part of functions of the access network device. In addition, the language such as "uplink" and "downlink" may also be replaced by the language corresponding to the communication between the terminals (for example, "side"). For example, the uplink channel, the downlink channel, etc. may be replaced by the side channel, and the uplink, the downlink, etc. may be replaced by sidelink.

In some embodiments, the terminal may be replaced by the access network device, the core network device, or the network device. In this case, the access network device, the core network device, or the network device may also be configured to have a structure that has all or part of functions of the terminal.

In some embodiments, the acquisition of data, information, etc. may comply with laws and regulations of the country where the data is obtained.

In some embodiments, data, information, etc. may be obtained with consent from users.

In addition, each element, each row, or each column in the table of the embodiments of the disclosure may be implemented as an independent embodiment, and the combination of any elements, any rows, or any columns may also be implemented as an independent embodiment.

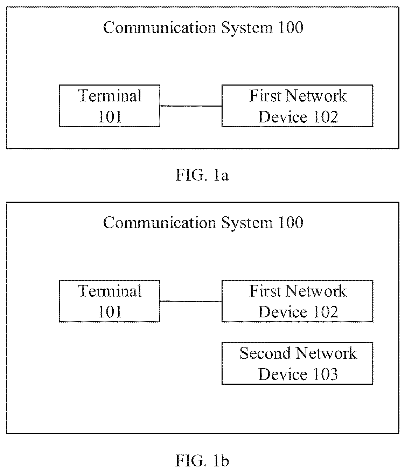

FIG. 1a and FIG. 1b are schematic diagrams illustrating an architecture of a communication system according to an embodiment of the disclosure.

As shown in FIG. 1a, the communication system 100 may include a terminal 101 and a network device 102. The network device 102 may include at least one of: an access network device, or a core network device.

As shown in FIG. 1b, the communication system 100 may further include a second network device 103. The second network device 103 may include at least one of: an access network device, or a core network device.

In embodiments of the disclosure, a network type covered by the first network device 102 is different from a network type covered by the second network device 103. For example, in some embodiments, the first network device 102 may be an NTN device, and the second network device 103 may be a TN device. In other embodiments, the first network device 102 may be a TN device, and the second network device 103 may be an NTN device.

In some embodiments, a TN device is deployed on the ground, and an NTN device is deployed on high-altitude platforms such as satellites, drones, balloons, or airships in the stratosphere.

In some embodiments, the terminal 101, for example, may include at least one of a mobile phone, a wearable device, an Internet of Things device, a car with a communication function, a smart car, a Pad, a computer with a wireless receiving and sending function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, or a wireless terminal in smart home, but is not limited herein.

In some embodiments, the access network device may be, for example, a node or device that accesses a terminal to a wireless network. The access network device may include at least one of an evolved NodeB (eNB), a next generation eNB (ng-eNB), a next generation NodeB (gNB), a node B (NB), a home node B (HNB), a home evolved nodeB (HeNB), a wireless backhaul device, a radio network controller (RNC), a base station controller (BSC), a base transceiver station (BTS), a base band unit (BBU), a mobile switching center, a base station in a 6G communication system, an open base station (Open RAN), a cloud base station (Cloud RAN), a base station in other communication systems, or an access node in a wireless networking (Wi-Fi^{™}) system, but is not limited herein.

In some embodiments, the technical solution of the disclosure may be applicable to an Open RAN architecture. In this case, interfaces between or within access network devices involved in the embodiments of the disclosure may become internal interfaces of the Open RAN, and processes and information interactions between these internal interfaces may be implemented through software or programs.

In some embodiments, the access network device may include a central unit (CU) and distributed units (DUs), in which the CU may also be called a control unit. A protocol layer of the access network device may be divided by adopting the CU-DU structure. Part of functions of the protocol layer are centrally controlled by the CU, and part of or all of remaining functions of the protocol layer are distributed in the DUs which are centrally controlled by the CU, but is not limited herein.

In some embodiments, the core network device may be a device including one or more network elements, or may be a plurality of devices or device groups, each including all or part of one or more network elements. The network element may be virtual or physical. The core network may include, for example, at least one of an evolved packet core (EPC), a 5G core network (5GCN), or a next generation core (NGC).

In some embodiments, the one or more network elements may include, for example: a policy control function (PCF), an application function (AF), a network application function (NAF), an authentication and key management for applications anchor function (AAnF), a bootstrapping server functionality (BSF), an access and mobility management function (AMF), a user plane function (UPF), a session management function (SMF), a mobility management entity (MME), and etc.

In some embodiments, the PCF, AF, NAF, AAnF, BSF, AMF, UPF, SMF, and MME are used for "functional limitation", and the names are not limited herein.

In some embodiments, the PCF, AF, NAF, AAnF, BSF, AMF, UPF, SMF, and MME may be independent of a core network device.

In some embodiments, the PCF, AF, NAF, AAnF, BSF, AMF, UPF, SMF, and MME may be part of a core network device 103.

It may be understood that the communication system described in the embodiments of the disclosure aims to more clearly illustrate the technical solutions of the embodiments of the disclosure, and does not constitute a limitation on the technical solution proposed in the embodiments of the disclosure. A person skilled in the art may know that with the evolution of the system architecture and the emergence of new service scenarios, the technical solution proposed in the embodiments of the disclosure are also applicable to similar technical problems.

The following embodiments of the disclosure may be applied to the communication system 100 or part of the subjects shown in FIG. 1a and FIG. 1b, but are not limited herein. The subjects shown in FIG. 1a and FIG. 1b are examples, and the communication system may include all or part of the subjects in FIG. 1a and FIG. 1b, or may include other subjects other than those shown in FIG. 1a and FIG. 1b. The number and form of the subjects are arbitrary. The connection relationships between the subjects are examples. The subjects may be connected or disconnected, and the connection may be in any manner, which may be a direct connection or an indirect connection, or may be a wired connection or a wireless connection.

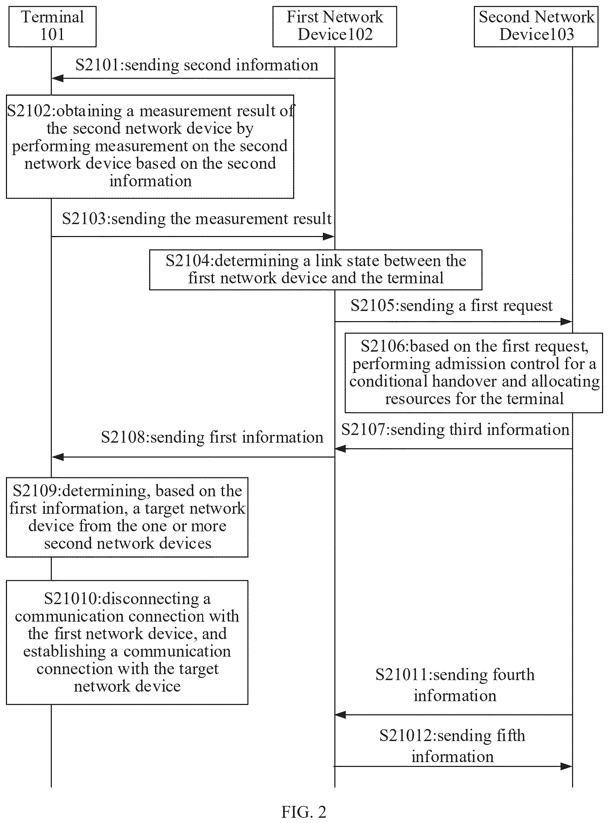

FIG. 2 is a schematic diagram illustrating interaction in a method for network handover according to an embodiment of the disclosure. As shown in FIG. 2, embodiments of the disclosure relate to a method for network handover. The method includes the following steps S2101 to S21012.

At step S2101, a first network device 102 sends second information to a terminal 101.

The second information includes configuration information for the terminal 101 to perform measurement on a second network device 103, and a network type covered by the first network device 102 is different from a network type covered by the second network device 103.

In some embodiments, the first network device 102 is a network device on which the terminal 101 currently camps, and the terminal 101 is connected to a cell covered by the first network device 102 before performing network handover.

In some embodiments, the second network device 103 is a network device around the terminal 101, and there may be one or more second network devices 102.

For example, during movement of the terminal 101, a link with the first network device 102 weakens. The first network device 102 sends measurement configuration information to the terminal 101, and the terminal 101 may measure surrounding network devices based on the measurement configuration information to determine whether there is a more suitable network device providing a more robust network connection.

In some embodiments, the first network device 102 is a TN device, and the second network device 103 is an NTN device. Thus, the second information includes information of the NTN device.

In some embodiments, a TN includes a terrestrial cellular network, such as a new radio (NR) network or a long term evolution (LTE) network. The first network device 102 may be an access network device or a core network device of the terrestrial cellular network, such as a base station of the terrestrial cellular network.

In some embodiments, an NTN device includes a satellite, a drone, or the like. For example, the second network device is a satellite, and the second information includes information such as a satellite identifier and ephemeris.

For example, a camping base station or a camping cell of the terminal 101 sends the measurement configuration information to the terminal 101. The measurement configuration information is configuration information for the terminal 101 to measure surrounding satellites, and the measurement configuration information includes information such as a satellite identifier and ephemeris.

In some embodiments, the first network device 102 is an NTN device, and the second network device 103 is a TN device. Thus, the second information includes information of surrounding TN devices.

In some embodiments, the first network device 102 may be an access network device and/or a core network device of the terrestrial cellular network, such as a base station of the terrestrial cellular network. Thus, the second information may include a cell identifier, confidential information, etc., of the terrestrial cellular network. The cell identifier is, for example, a physical cell identifier (PCI) and a frequency point. The terminal 101 may distinguish different cells based on the PCI and the frequency point.

For example, a serving satellite (or a source satellite) of the terminal 101 sends the measurement configuration information to the terminal 101. The measurement configuration information is configuration information for the terminal 101 to measure cells of a surrounding cellular network of the terminal 101, and the measurement configuration information includes cell information of the terrestrial cellular network.

At step S2102, the terminal 101 obtains a measurement result of the second network device 103 by performing measurement on the second network device 103 based on the second information.

In some embodiments, the terminal 101 obtains, from the first network device 102, configuration information for performing measurement on the second network device 103, and performs measurement on the second network device 103, including measuring a signal strength, a signal quality, and the like of the second network device 103.

For example, in an LTE network, the terminal 101 may measure a reference signal receiving power (RSRP) of the second network device 103, in which the RSRP is a key parameter representing wireless signal strength. The terminal 101 may measure a reference signal receiving quality (RSRQ) of the second network device 103, in which the RSRQ is a key parameter representing wireless signal quality.

At step S2103, the terminal 101 sends the measurement result to the first network device 102.

In some embodiments, the first network device 102 is a TN device, and the second network device 103 is an NTN device.

For example, the first network device 102 is a base station of the terrestrial cellular network, and the second network device 103 is a satellite. The terminal 101 receives the measurement configuration information sent from the camping base station or the camping cell to the terminal 101. The measurement configuration information includes a satellite identifier, ephemeris, and the like. The terminal 101 senses a current multi-coverage state, that is, senses which satellites are nearby, performs measurement on the surrounding satellites based on the measurement configuration information, measures a signal strength, a signal quality, and the like of the surrounding satellites, and sends the measurement result to the camping base station or the camping cell.

In some embodiments, the first network device 102 is an NTN device, and the second network device 103 is a TN device.

For example, the first network device 102 is a satellite, and the second network device 103 is a base station of the terrestrial cellular network. The terminal 101 receives the measurement configuration information sent from a serving satellite or a source satellite to the terminal 101. The measurement configuration information includes cell information of the terrestrial cellular network and the like. The terminal 101 senses a current multi-coverage state, that is, senses which cells are nearby, performs measurement on the surrounding cells based on the measurement configuration information, measures a signal strength, a signal quality, and the like of the surrounding cells, and sends the measurement result to the serving satellite.

In some embodiments, the terminal 101 performs measurement on the one or more second network devices 103, obtains a measurement result of the one or more second network devices 103, and sends the measurement result of the one or more second network devices 103 to the first network device 102.

For example, the first network device 102 is a base station of the terrestrial cellular network, and the second network device 103 is a satellite. The terminal 101 senses that there are ten satellites nearby, measures a signal strength, a signal quality, and the like of the ten satellites respectively, and reports the measurement results of the ten satellites to the camping base station or the camping cell.

At step S2104, the first network device 102 determines a link state between the first network device 102 and the terminal 101.

In some embodiments, determining the link state between the first network device 102 and the terminal 101 includes determining a link strength, a link quality, and the like.

At step S2105, the first network device 102 sends a first request to the second network device 103.

In some embodiments, the first request indicates the second network device to perform admission control for a conditional handover and to allocate resources for the terminal 101. The first request may be a conditional handover (CHO) request.

In some embodiments, the first network device 102 determines whether to send the first request to the second network device 103 based on the link state between the first network device 102 and the terminal 101.

In some embodiments, the first network device 102 selects, based on the measurement result sent from the terminal 101, one or more second network devices 103 to send the first request to.

For example, the first network device 102 is a base station of the terrestrial cellular network, and the second network device 103 is a satellite. A camping base station or a camping cell of the terminal 101 receives measurement results of ten satellites reported by the terminal 101, selects one or more from the ten satellites based on a preset algorithm, for example, five satellites, and sends the conditional handover request to the five satellites.

At step S2106, based on the first request, the second network device 103 performs the admission control for the conditional handover and allocates resources for the terminal 101.

In some embodiments, the admission control for the conditional handover performed by the second network device 103 is used to judge and control whether the terminal 101 is allowed to access a network, including judging whether to allow the terminal 101 to access the network based on a load level of the network, performing compliance check on the terminal 101 of the first network device 102 to judge whether to allow the terminal 101 to access, and the like.

In some embodiments, the first network device 102 is a TN device, and the second network device 103 is an NTN device.

For example, the first network device 102 is a base station of the terrestrial cellular network, and the second network device 103 is a satellite. A camping base station or a camping cell of the terminal 101 selects one or more satellites to send the conditional handover request to. Selected satellites are referred to as candidate satellites. After receiving the conditional handover request, each candidate satellite performs the admission control for the conditional handover to prepare for handover and allocate resources for the terminal 101.

In some embodiments, the first network device 102 is an NTN device, and the second network device 103 is a TN device.

For example, the first network device 102 is a base station of the terrestrial cellular network, and the second network device 103 is a satellite. A serving satellite or a source satellite of the terminal 101 selects one or more terrestrial cellular network cells to send the conditional handover request to. Selected cells are referred to as candidate cells. After receiving the conditional handover request, each candidate cell performs the admission control for the conditional handover to prepare for handover and allocate resources for the terminal 101.

At step S2107, the second network device 103 sends third information to the first network device 102.

In some embodiments, some second network devices 103 allow terminal access, while some second network devices 103 do not allow terminal access. For example, for a second network device 103 used for executing emergency services, if the terminal 101 is a common user equipment and the second network device 103 determines that a service level of the terminal 101 does not belong to an emergency service, the terminal 101 is not allowed to access.

In some embodiments, the third information indicates a result of the admission control for the conditional handover performed by the second network device, and the third information includes cell information of the second network device permitted to be accessed by the terminal.

In some embodiments, all second network devices 103 permitted to be accessed by the terminal send the cell information to the first network device 102.

In some embodiments, the third information is carried in a CHO request acknowledge, and the third information may be radio resource control (RRC) reconfiguration information.

For example, the first network device 102 is a base station of the terrestrial cellular network, and the second network device 103 is a satellite. A camping base station or a camping cell of the terminal 101 selects five satellites to send a conditional handover request to. Selected satellites are referred to as candidate satellites. After receiving the conditional handover request, each candidate satellite performs the admission control for the conditional handover. One candidate satellite is used for fire alarm service, and the terminal 101 is a common user equipment, thus access is not allowed. Remaining four candidate satellites all permit the terminal 101 to access. The four candidate satellites each sends the CHO request acknowledge, which includes the RRC reconfiguration message, to the camping base station or the camping cell of the terminal 101.

At step S2108, the first network device 102 sends first information to the terminal 101.

The first information indicates cell information of the one or more second network devices.

In some embodiments, the first network device creates the first information based on the third information. For example, based on received cell information of one or more second network devices permitted to be accessed by the terminal, the first information is created, in which the first information indicates the cell information of the one or more second network devices permitted to be accessed by the terminal.

In some embodiments, the terminal 101 performs the conditional handover. The first information includes an identifier, an access threshold, and the like of one or more candidate second network devices 103 prepared for the terminal 101 by the first network device 102. The terminal 101 selects one second network device 103 from the candidate list as a target network device for performing handover.

In some embodiments, the first information further includes an additional measurement configuration. The terminal 101 may further monitor the one or more candidate second network devices 103 based on the measurement configuration to determine the target network device. For example, the second information in step 2101 includes measurement of signal strength. In a preparation phase of the conditional handover, the terminal 101 only measured the signal strength of the second network device 103. The first information includes the measurement of signal quality, and the terminal 101 further measures the signal quality of the second network device 103.

In some embodiments, the third information includes the RRC reconfiguration information. The first network device 102 creates the first information based on the RRC reconfiguration information, in which the first information includes a list of candidate second network devices 103 and additional RRC measurement configuration, and sends the first information to the terminal 101 for the terminal 101 to monitor the candidate second network devices 103 and select a target network device from the candidate network devices.

In some embodiments, the first network device 102 is an NTN device, and the second network device 103 is a TN device. The first information includes at least one of: a cell identifier of the TN device, an access threshold of the TN device, or a type of measurement to be performed on the TN device.

For example, the first network device 102 is a satellite, and the second network device 103 is a base station of the terrestrial cellular network. The terminal 101 camps on a satellite network. The first information sent from a serving satellite or a source satellite of the terminal 101 to the terminal 101 includes cell information of the terrestrial cellular network, such as information of candidate cells like NR or LTE, specifically including at least one of a cell identifier, an access threshold, or a type of measurement to be performed.

In some embodiments, the first network device 102 is a TN device, and the second network device 103 is an NTN device. The first information includes at least one of: a satellite identifier of the NTN device, ephemeris information of the NTN device, an access threshold of the NTN device, or a type of measurement to be performed on the NTN device.

For example, the first network device 102 is a base station of the terrestrial cellular network, and the second network device 103 is a satellite. The terminal 101 camps on the terrestrial cellular network. The first information sent from a camping base station of the terminal 101 to the terminal 101 includes information related to satellites, specifically including at least one of a satellite identifier, ephemeris information, an access threshold, or a type of measurement to be performed.

At step S2109, the terminal 101 determines, based on the first information, a target network device from the one or more second network devices.

In some embodiments, the terminal 101 maintains connection with the first network device 102. The terminal 101 monitors the one or more second network devices 103 indicated by the first information based on the first information.

In some embodiments, the terminal 101 opens a time window to monitor the second network device 103 for a preset duration. If a signal strength, a signal quality, etc., of a certain second network device 103 remain consistently good throughout the preset duration, the terminal 101 may determine that second network device 103 as the target network device.

For example, the first network device 102 is a satellite, and the second network device 103 is a base station of the terrestrial cellular network. The terminal maintains connection with the source satellite, starts monitoring conditions of four candidate terrestrial cellular network cells, makes a conditional handover decision, and determines one of the candidate terrestrial cellular network cells as the target cell.

At step S21010, the terminal 101 disconnects a communication connection with the first network device 102 and establishes a communication connection with the target network device.

In some embodiments, after determining the target network device, the terminal 101 prepares to detach (release) from the first network device 102 and synchronize with the target network device, sends a reconfiguration complete message to the target network device, and completes the conditional handover process.

In some embodiments, the first network device 102 is an NTN device, and the second network device 103 is a TN device. The terminal hands over from the NTN to the TN. For example, the first network device 102 is a satellite, and the second network device 103 is a base station of the terrestrial cellular network. A UE prepares to detach from the source satellite and synchronize with a target terrestrial cellular network cell, and sends an RRC reconfiguration complete message to the target terrestrial cellular network cell, completing the CHO process.

At step S21011, the target network device sends fourth information to the first network device 102.

The fourth information indicates the first network device 102 to release resources for communication with the terminal 101.

In some embodiments, the terminal 101 performs the conditional handover, and hands over from the first network device 102 to the target network device. The target network device checks a completion status of the conditional handover of the terminal 101, sends the fourth information to the first network device 102. After receiving the fourth information, the first network device 102 releases resources for communication with the terminal 101, completing the link handover.

In some embodiments, the fourth information may be a UE context release message.

In some embodiments, the first network device 102 is an NTN device, and the second network device 103 is a TN device. The terminal hands over from the NTN to the TN. For example, the first network device 102 is a satellite, and the second network device 103 is a base station of the terrestrial cellular network. The target terrestrial cellular network cell checks a completion status of the conditional handover and sends the UE context release message to the source satellite. The UE context release message indicates the first network device 102 to release resources for communication with the terminal 101, completing the link handover.

At step S21012, the first network device 102 sends fifth information to a third network device.

The third network device is a second network device 103 other than the target network device, and the fifth information indicates the third network device to release reserved resources.

In some embodiments, at step S2106, the second network device 103 that received the first request allocates resources for the terminal 101 and is prepare for handover. The terminal 101 selects the target network device from the one or more second network devices 103 for handover. After the terminal 101 completes the handover, the second network device(s) 103 other than the target network device receive the fifth information and release the resources allocated for the terminal 101.

In some embodiments, the fifth information may be a conditional handover cancel message.

In some embodiments, the first network device 102 is an NTN device, and the second network device 103 is a TN device. The terminal hands over from the NTN to the TN. For example, the first network device 102 is a satellite, and the second network device 103 is a base station of the terrestrial cellular network. The source satellite checks whether the conditional handover is completed and then sends the conditional handover cancel message to other candidate terrestrial cellular network cells to release the reserved resources.

The method for network handover in the embodiments of the disclosure may include at least one of step S2101 to step S21012. For example, step S2108 may be implemented as an independent embodiment, step S2101 to step S2108 may be implemented as an independent embodiment, and step S2108 to step S21012 may be implemented as an independent embodiment, which is not limited herein.

In some embodiments, step S2101 to step S2107 and step S2109 to step S21012 are optional steps, and in different embodiments, one or more of the steps may be omitted or replaced.

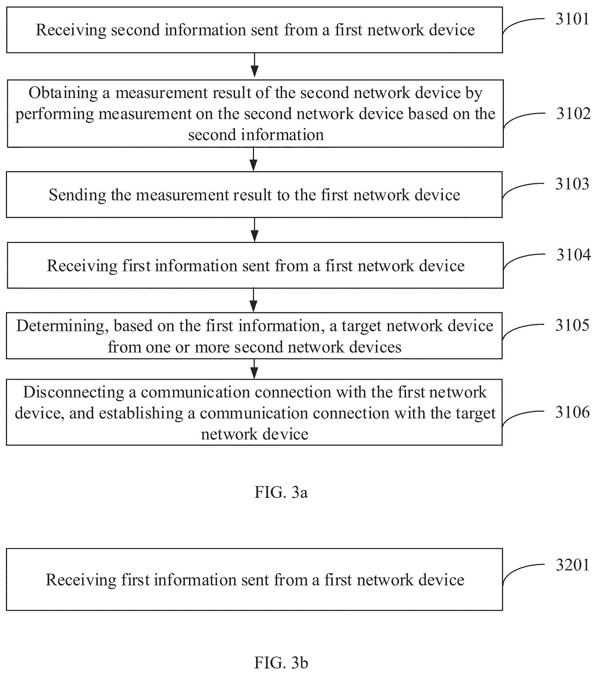

FIG. 3a is a flowchart illustrating a method for network handover according to an embodiment of the disclosure. As shown in FIG. 3a, embodiments of the disclosure relate to a method for network handover. The method is performed by a terminal 101 and includes the following steps 3101 to 3106.

At step 3101, second information sent from a first network device is received.

The second information includes configuration information for the terminal to perform measurement on a second network device.

For optional implementations of step 3101, reference may be made to the optional implementations of step S2101 in FIG. 2 and other relevant parts in the embodiments related to FIG. 2, which is not repeated herein.

At step 3102, a measurement result of the second network device is obtained by performing measurement on the second network device based on the second information.

For optional implementations of step 3102, reference may be made to the optional implementations of step S2102 in FIG. 2 and other relevant parts in the embodiments related to FIG. 2, which is not repeated herein.

At step 3103, the measurement result is sent to the first network device.

For optional implementations of step 3103, reference may be made to the optional implementations of step S2103 in FIG. 2 and other relevant parts in the embodiments related to FIG. 2, which is not repeated herein.

At step 3104, first information sent from the first network device is received.

The first information indicates cell information of one or more second network devices, and a network type covered by the first network device is different from a network type covered by the second network device.

In some embodiments, the first network device is an NTN device, the second network device is a TN device, and the first information includes at least one of: a cell identifier of the TN device, an access threshold of the TN device, or a type of measurement to be performed on the TN device.

In some embodiments, the first network device is a TN device, the second network device is an NTN device, and the first information includes at least one of: a satellite identifier of the NTN device, ephemeris information of the NTN device, an access threshold of the NTN device, or a type of measurement to be performed on the NTN device.

For optional implementations of step 3104, reference may be made to the optional implementations of step S2108 in FIG. 2 and other relevant parts in the embodiments related to FIG. 2, which is not repeated herein.

At step 3105, a target network device is determined from the one or more second network devices based on the first information.

For optional implementations of step 3105, reference may be made to the optional implementations of step S2109 in FIG. 2 and other relevant parts in the embodiments related to FIG. 2, which is not repeated herein.

At step 3106, a communication connection with the first network device is disconnected, and a communication connection with the target network device is established.

For optional implementations of step 3106, reference may be made to the optional implementations of step S21010 in FIG. 2 and other relevant parts in the embodiments related to FIG. 2, which is not repeated herein.

The communication method in the embodiments of the disclosure may include at least one of step 3101 to step 3106. For example, step 3104 may be implemented as an independent embodiment, step 3104 and step 3105 may be implemented as an independent embodiment, and step 3101, step 3102, step 3103 and step 3104 may be implemented as an independent embodiment, which is not limited herein.

In some embodiments, step 3101, step 3102, step 3103, step 3105, and step 3106 are optional steps, and in different embodiments, one or more of the steps may be omitted or replaced.

In the implementations or embodiments, without conflict, the steps may be performed independently, arbitrarily combined, or in an exchanged order; optional methods or optional examples may be arbitrarily combined, and may also be arbitrarily combined with any steps from other implementations or other embodiments.

FIG. 3b is a flowchart illustrating a method for network handover according to an embodiment of the disclosure. As shown in FIG. 3b, embodiments of the disclosure relate to a method for network handover. The method is performed by a terminal 101 and includes the following step 3201.

At step 3201, first information sent from the first network device is received.

The first information indicates cell information of one or more second network devices, and a network type covered by the first network device is different from a network type covered by the second network device.

In some embodiments, the first network device is an NTN device, the second network device is a TN device, and the first information includes at least one of: a cell identifier of the TN device, an access threshold of the TN device, or a type of measurement to be performed on the TN device.

In some embodiments, the first network device is a TN device, the second network device is an NTN device, and the first information includes at least one of: a satellite identifier of the NTN device, ephemeris information of the NTN device, an access threshold of the NTN device, or a type of measurement to be performed on the NTN device.

For optional implementations of step 3201, reference may be made to the optional implementations of step S2108 in FIG. 2 and other relevant parts in the embodiments related to FIG. 2, which is not repeated herein.

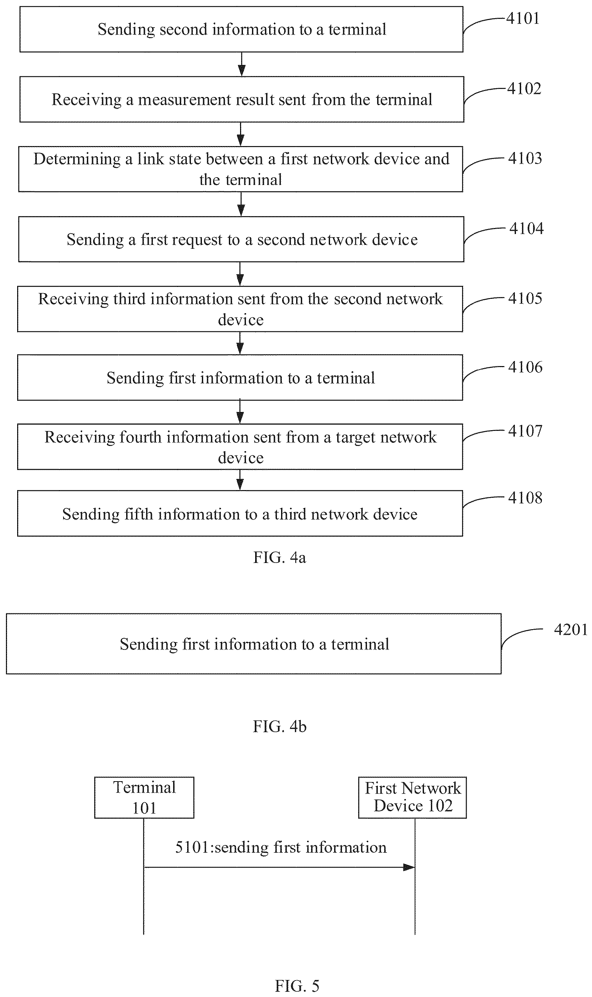

FIG. 4a is a flowchart illustrating a method for network handover according to an embodiment of the disclosure. As shown in FIG. 4a, embodiments of the disclosure relate to a method for network handover. The method is performed by a first network device 102 and includes the following steps 4101 to 4108.

At step 4101, second information is sent to a terminal.

The second information includes configuration information for the terminal to perform measurement on a second network device.

For optional implementations of step 4101, reference may be made to the optional implementations of step S2101 in FIG. 2 and other relevant parts in the embodiments related to FIG. 2, which is not repeated herein.

At step 4102, a measurement result sent from the terminal is received.

The measurement result is obtained by the terminal performing measurement on the second network device based on the second information.

For optional implementations of step 4102, reference may be made to the optional implementations of step S2103 in FIG. 2 and other relevant parts in the embodiments related to FIG. 2, which is not repeated herein.

At step 4103, a link state between the first network device and the terminal is determined.

For optional implementations of step 4103, reference may be made to the optional implementations of step S2104 in FIG. 2 and other relevant parts in the embodiments related to FIG. 2, which is not repeated herein.

At step 4104, a first request is sent to the second network device.

The first request indicates the second network device to perform admission control for a conditional handover and to allocate resources for the terminal.

For optional implementations of step 4104, reference may be made to the optional implementations of step S2105 in FIG. 2 and other relevant parts in the embodiments related to FIG. 2, which is not repeated herein.

At step 4105, third information sent from the second network device is received.

The third information indicates a result of the admission control for the conditional handover performed by the second network device, and the third information includes cell information of the second network device permitted to be accessed by the terminal.

For optional implementations of step 4105, reference may be made to the optional implementations of step S2107 in FIG. 2 and other relevant parts in the embodiments related to FIG. 2, which is not repeated herein.

At step 4106, first information is sent to the terminal.

The first information indicates cell information of one or more second network devices, and a network type covered by the first network device is different from a network type covered by the second network device.

In some embodiments, the first network device is an NTN device, the second network device is a TN device, and the first information includes at least one of: a cell identifier of the TN device, an access threshold of the TN device, or a type of measurement to be performed on the TN device.

In some embodiments, the first network device is a TN device, the second network device is an NTN device, and the first information includes at least one of: a satellite identifier of the NTN device, ephemeris information of the NTN device, an access threshold of the NTN device, or a type of measurement to be performed on the NTN device.

For optional implementations of step 4106, reference may be made to the optional implementations of step S2108 in FIG. 2 and other relevant parts in the embodiments related to FIG. 2, which is not repeated herein.

At step 4107, fourth information sent from a target network device is received.

The target network device is determined by the terminal from the one or more second network devices, and the fourth information indicates the first network device to release resources for communication with the terminal.

For optional implementations of step 4107, reference may be made to the optional implementations of step S21011 in FIG. 2 and other relevant parts in the embodiments related to FIG. 2, which is not repeated herein.

At step 4108, fifth information is sent to a third network device.

The third network device is a second network device other than the target network device, and the fifth information indicates the third network device to release reserved resources.

For optional implementations of step 4108, reference may be made to the optional implementations of step S21012 in FIG. 2 and other relevant parts in the embodiments related to FIG. 2, which is not repeated herein.

The communication method in the embodiments of the disclosure may include at least one of step 4101 to step 4108. For example, step 4106 may be implemented as an independent embodiment, and step 4106, step 4107, and step 4108 may be implemented as an independent embodiment, which is not limited herein.

In some embodiments, step 4101 to 4105, step 4107, and step 4108 are optional steps, and in different embodiments, one or more of the steps may be omitted or replaced.

In the implementations or embodiments, without conflict, the steps may be performed independently, arbitrarily combined, or in an exchanged order; optional methods or optional examples may be arbitrarily combined, and may also be arbitrarily combined with any steps from other implementations or other embodiments.

FIG. 4b is a flowchart illustrating a method for network handover according to an embodiment of the disclosure. As shown in FIG. 4b, embodiments of the disclosure relate to a method for network handover. The method is performed by a first network device 102 and includes the following step 4201.

At step 4201, first information is sent to a terminal.

The first information indicates cell information of one or more second network devices, and a network type covered by the first network device is different from a network type covered by the second network device.

In some embodiments, the first network device is an NTN device, the second network device is a TN device, and the first information includes at least one of: a cell identifier of the TN device, an access threshold of the TN device, or a type of measurement to be performed on the TN device.

In some embodiments, the first network device is a TN device, the second network device is an NTN device, and the first information includes at least one of: a satellite identifier of the NTN device, ephemeris information of the NTN device, an access threshold of the NTN device, or a type of measurement to be performed on the NTN device.

For optional implementations of step 4201, reference may be made to the optional implementations of step S2108 in FIG. 2 and other relevant parts in the embodiments related to FIG. 2, which is not repeated herein.

FIG. 5 is a flowchart illustrating a method for network handover according to an embodiment of the disclosure. As shown in FIG. 5, embodiments of the disclosure relate to a method for network handover. The method is applied to a communication system 100 and includes the following step 5101.

At step 5101, a terminal sends first information to a first network device, in which the first information indicates cell information of one or more second network devices, and a network type covered by the first network device is different from a network type covered by the second network device.

For optional implementations of step 5101, reference may be made to the optional implementations of step S2108 in FIG. 2 and other relevant parts in the embodiments related to FIG. 2. In some optional embodiments, step 5101 may include step S3104 in FIG. 3a and step S4106 in FIG. 4a, optional implementations of FIG. 3a to FIG. 3b and FIG. 4a to FIG. 4b, and other relevant parts in the embodiments related to FIG. 2, which is not repeated herein.

In some embodiments, the method may include the methods described in the embodiments related to a communication system side, a user equipment side, a network device side, and the like, which is not repeated herein.

In some embodiments, the first network device 102 is a TN device and the second network device 103 is an NTN device, or the first network device 102 is an NTN device and the second network device 103 is a TN device.

In some embodiments, a TN includes a terrestrial cellular network, such as an NR network or a LTE network. An NTN device includes a satellite, a drone, or the like.

In some embodiments, the communication system 100 may be applied to an NTN. In the NTN communication, wireless resources are provided via satellites or drones rather than terrestrial base stations. A communication link between a UE and a satellite is a service link, a link between the satellite and a ground receiving station is a feeder link, and the ground receiving station is connected to a core network, thus forming an access of the UE to the core network via a satellite access network.

The following takes a case that the first network device 102 is a satellite and the second network device 103 is a base station of the terrestrial cellular network as an example for an illustrative introduction of the method.

In some embodiments, the method for network handover may be applied to a conditional handover process of an NTN. For the NTN, a main improvement from a normal handover to a conditional handover is to enable each UE to continuously monitor radio quality before handover execution and ultimately select an optimal target satellite from a list of candidate neighboring satellites.

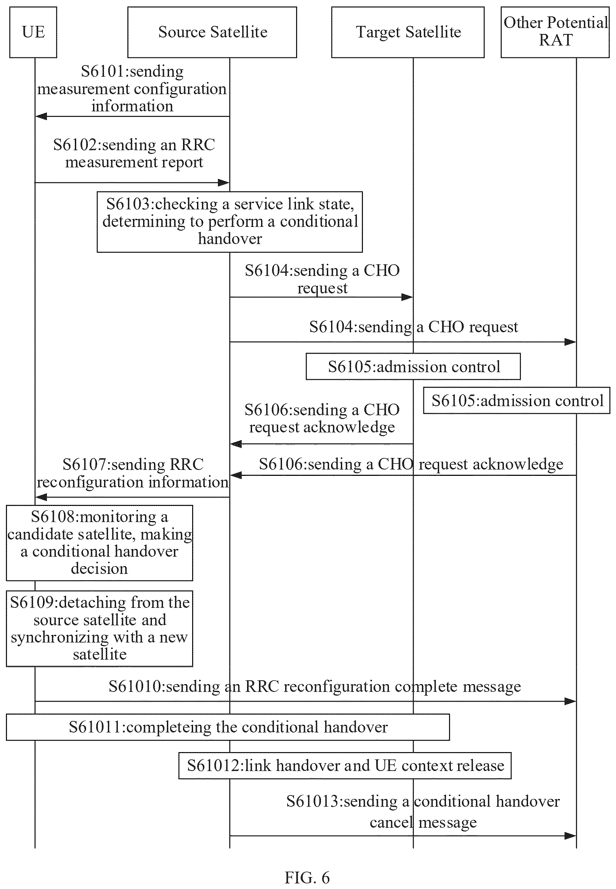

In some embodiments, as shown in FIG. 6, the UE performs the conditional handover from a source satellite to a target satellite.

At step S6101, a source satellite sends measurement configuration information to the UE.

In some embodiments, the measurement configuration information may include information such as satellite identifiers and ephemeris, or cell information of the terrestrial cellular network.

In some embodiments, the terminal receives the measurement configuration information from the source satellite, senses a current multi-coverage state, and then reports based on the measurement configuration.

At step S6102, the terminal sends an RRC measurement report to the source satellite.

In some embodiments, the RRC measurement report includes information of a series of candidate satellites or terrestrial cellular network cells, indicating a requirement to handover to a next satellite or terrestrial cellular network cell.

At step S6103, the source satellite checks a service link state.

At step S6104, the source satellite sends a CHO request to each candidate satellite or terrestrial cellular network cell.

At step S6105, each candidate satellite or terrestrial cellular network cell performs admission control for a conditional handover request to prepare for handover and allocate resources for the UE.

At step S6106, a candidate satellite or a terrestrial cellular network cell that permit access sends a CHO request acknowledge to the source satellite.

In some embodiments, the CHO request acknowledge includes RRC reconfiguration information.

At step S6107, the source satellite creates a conditional handover command based on the RRC reconfiguration information and sends the conditional handover command to the UE.

In some embodiments, the conditional handover command includes a candidate list and an additional RRC measurement configuration.

In some embodiments, the candidate list includes cell information of the terrestrial cellular network, such as a cell identifier, an access threshold, and the like.

At step S6108, the terminal maintains a connection with the source satellite, starts monitoring a condition of the candidate satellites or the terrestrial cellular network (NR, LTE) cells, makes a conditional handover decision, and determines a target RAT.

In some embodiments, the target RAT may be the target satellite as shown in FIG. 6, or may be the target terrestrial cellular network cell.

At step S6109, the UE prepares to detach from the source satellite and synchronize with the target satellite or the target terrestrial cellular network cell.

At step S61010, the UE sends an RRC reconfiguration complete message to the target satellite or the target terrestrial cellular network cell.

At step S61011, the conditional handover process is completed.

At step S61012, the target satellite or the target terrestrial cellular network cell checks a completion status of the conditional handover, sends a UE context release message to the source satellite, and complete a link handover.

At step S61013, the source satellite checks whether the conditional handover is completed and then sends a conditional handover cancel message to other candidate satellites or terrestrial cellular network cells to release reserved resources.

It should be noted that, in the above embodiments, the UE camps on a satellite network, and cell information of a terrestrial cellular network (such as information of target cells like NR or LTE) is added to a candidate list of a CHO message, thus enabling the terrestrial cellular network to become a target RAT for the NTN network handover.

Similarly, if the UE camps on the terrestrial cellular network, satellite-related information (such as a satellite number, ephemeris data, etc.) is added to the candidate list of the CHO message, thus enabling the NTN network to become a target RAT for the terrestrial cellular network handover.

Thus, the method for network handover of the disclosure may enable the NTN network and the terrestrial wireless cellular network to mutually become a target RAT for handover. By utilizing the conditional handover, measurement and handover to the target NTN network or the terrestrial cellular network are performed, further improving service continuity between the NTN network and the terrestrial cellular network and achieving deep integration of the NTN network and the terrestrial cellular network.

The embodiments of the disclosure also provide an apparatus for implementing any one of the above methods. For example, an apparatus is provided, including units for performing the steps executed by the UE in any one of the above methods. Furthermore, another apparatus is provided, including units or modules for performing the steps executed by the network device (e.g., an access network device, a core network node, a core network device, etc.) in any one of the above methods.

It should be understood that a division of units in the above apparatus is only a division of logical functions. In actual implementations, they may be fully or partially integrated into one physical entity, or may be physically separated. In addition, the units or the modules in the apparatus may be implemented in the form of software called by a processor. For example, the apparatus includes a processor, in which the processor is connected to a memory storing instructions. The processor calls the instructions stored in the memory to implement any one of the above methods or to implement functions of the units or the modules of the above apparatus. The processor is, for example, a general-purpose processor, such as a central processing unit (CPU) or a microprocessor, and the memory is a memory inside the apparatus or a memory outside the apparatus. Alternatively, the units or the modules in the apparatus may be implemented in the form of a hardware circuit. The functions of part of or all units or modules may be implemented by designing the hardware circuit. The hardware circuit may be understood as one or more processors. For example, in an implementation, the hardware circuit is an application specific integrated circuit (ASIC). The functions of part of or all units or modules are implemented by designing logical relationships of components within the circuit. In another implementation, the hardware circuit may be implemented by a programmable logic device (PLD). Taking a field-programmable gate array (FPGA) as an example, it may include a large number of logic gate circuits. The connection relationships between the logic gate circuits are configured via profiles to implement the functions of part of or all units or modules. All units or modules of the above apparatus may be fully implemented in the form of software called by the processor, or fully implemented in the form of the hardware circuit, or partially implemented in the form of software called by the processor with remaining portions implemented in the form of the hardware circuit.

In the embodiments of the disclosure, the processor is a circuit with a signal processing capability. In an implementation, the processor may be a circuit with a capability to read and run instructions, such as a CPU, a microprocessor, a graphics processing unit (GPU) (which may be understood as a type of the microprocessor), a digital signal processor (DSP), etc. In another implementation, the processor may implement functions via a logical relationship of the hardware circuit. The logical relationship of the hardware circuit is fixed or reconstructed, for example, a hardware circuit implemented by the ASIC or the PLD, such as the FPGA. In the reconstructed hardware circuit, a process that the processor loads the profiles to implement a hardware circuit configuration may be understood as a process that the processor loads the instructions to implement the functions of part of or all units. Further, it may also be a hardware circuit designed for artificial intelligence, which may be understood as a type of ASIC, such as a neural network processing unit (NPU), a tensor processing unit (TPU), a deep learning processing unit (DPU), etc.

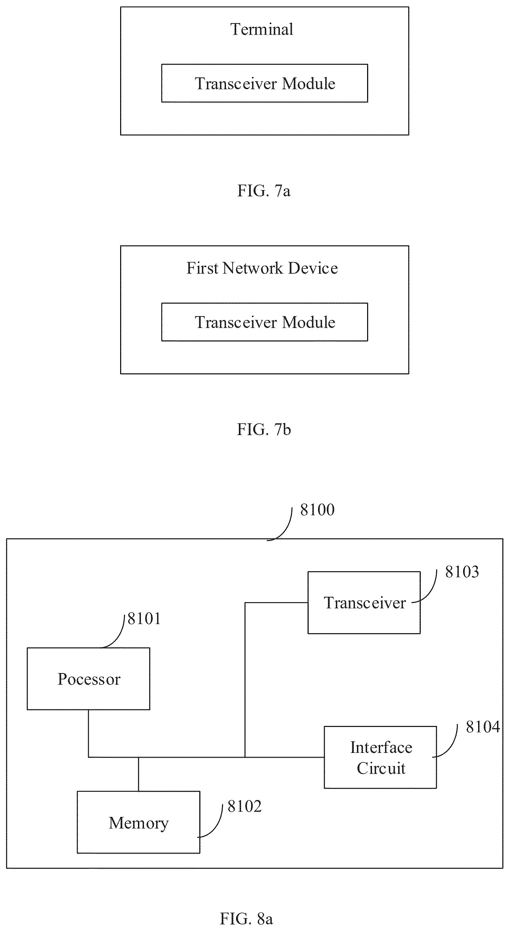

FIG. 7a is a block diagram illustrating a terminal according to an embodiment of the disclosure. As shown in FIG. 7a, the terminal includes: a transceiver module, configured to receive first information sent from a first network device, in which the first information indicates cell information of one or more second network devices, and a network type covered by the first network device is different from a network type covered by the second network device. Optionally, the transceiver module is configured to perform steps related to "receiving first information sent from a first network device" performed by the terminal 101 in any of the above methods, which are not repeated herein. Optionally, the first apparatus for network handover further includes at least one of: a determining module. The determining module is configured to perform steps related to determining performed by the terminal 101 in any of the above methods, which are not repeated herein.

FIG. 7b is a block diagram illustrating a first network device according to an embodiment of the disclosure. As shown in FIG. 7b, the first network device includes: a transceiver module, configured to send first information to a terminal, in which the first information indicates cell information of one or more second network devices, and a network type covered by the first network device is different from a network type covered by the second network device. Optionally, the transceiver module is configured to perform steps related to "sending first information to a terminal" performed by the first network device 102 in any of the above methods, which are not repeated herein.

FIG. 8a is a block diagram illustrating a communication device 8100 according to an embodiment of the disclosure. The communication device 8100 may be a first network device (e.g., an access network device, a core network device, etc.), a terminal (e.g., a user equipment), a chip, a system on chip or a processor that supports the network device to implement any one of the above methods, or a chip, a system on chip or a processor that supports the terminal to implement any one of the above methods. The communication device 8100 may be configured to implement the methods described in the method embodiments, and for details, reference may be made to descriptions in the method embodiments.

As shown in FIG. 8a, the communication device 8100 may include one or more processors 8101. The processor 8100 may include a general purpose processor or a dedicated processor. For example, the processor may be a baseband processor or a central processor. The baseband processor may be configured to process a communication protocol and communication data, and the central processor may be configured to control a communication device (e.g., a base station, a baseband chip, a terminal, a terminal chip, a DU or CU, etc.), execute a computer program, and process data of the computer program. The processor 8101 is configured to call instructions so that the communication device 8100 may implement any one of the above methods.

In some embodiments, the communication device 8100 may also include one or more memories 8102 for storing instructions. Optionally, all or some of the memories 8102 may also be located outside the communication device 8100.

In some embodiments, the communication device 8100 further includes one or more transceivers 8103. When the communication device 8100 includes one or more transceivers 8103, communication steps such as sending and receiving in the above methods are performed by the transceiver 8103, and other steps are performed by the processor 8101.

In some embodiments, the transceiver may include a receiver and a transmitter, which may be separate or integrated together. Optionally, the terms such as transceiver, transceiver unit, transceiving circuit, etc. may be used interchangeably; the terms such as transmitter, transmission unit, transmitting circuit, etc. may be used interchangeably; and the terms such as receiver, reception unit, receiving circuit, etc. may be used interchangeably.

Optionally, the communication device 8100 further includes one or more interface circuits 8104. The interface circuit 8104 is connected to the memory 8102. The interface circuit 8104 may be configured to receive signals from the memory 8102 or other devices, and may be configured to send the signals to the memory 8102 or other devices. For example, the interface circuit 8104 may read instructions stored in the memory 8102 and send the instructions to the processor 8101.

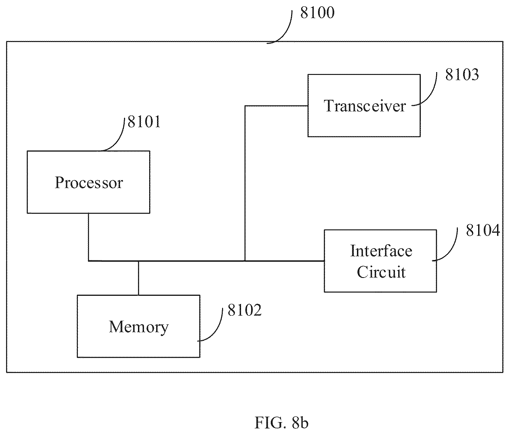

The communication device 8100 described in the above embodiments may be a network device or a terminal, but the scope of the communication device 8100 described in the disclosure is not limited, and a structure of the communication device 8100 may not be limited by FIG. 8. The communication device may be a stand-alone device or may be a part of a larger device. For example, the communication device may be the following: (1) a stand-alone integrated circuit (IC), or a chip, or a system on chip or a subsystem; (2) a set of one or more ICs, optionally, which may also include a storage component for storing data and a computer program; (3) an ASIC, such as a Modem; (4) a module that may be embedded within other devices; (5) a receiver, a terminal, a smart terminal device, a cellular phone, a wireless device, a handset, a mobile unit, a vehicle-mounted device, a network side device, a cloud device, an artificial intelligence device, etc.; (6) others, and so forth.

FIG. 8b is a block diagram of a chip 8200 according to an embodiment of the disclosure. For a case where the communication device 8100 may be a chip or a system on chip, reference may be made to the block diagram of the chip 8200 shown in FIG. 8B, which it is not limited herein.

The chip 8200 includes one or more processors 8201. The processor 8201 is configured to call the instructions to cause the chip 8200 to execute any one of the above methods.

In some embodiments, the chip 8200 further includes one or more interface circuits 8202. The interface circuit 8202 is connected to a memory 8203. The interface circuit 8202 may be configured to receive signals from the memory 8203 or other devices, and may be configured to send the signals to the memory 8203 or other devices. For example, the interface circuit 8202 may read the instructions stored in the memory 8203 and send the instructions to the processor 8201. Optionally, the terms such as interface circuit, interface, transceiver pin, transceiver, etc. may be used interchangeably.

In some embodiments, the chip 8200 further includes one or more memories 8203 for storing instructions. Optionally, all or part of the memories 8203 may be located outside the chip 8200.

The disclosure also provides a storage medium for storing instructions. When the instructions are running on the communication device 8100, the communication device 8100 is caused to implement any one of the above methods. Optionally, the above storage medium is an electronic storage medium. Optionally, the above storage medium is a computer-readable storage medium, which is not limited herein. The above storage medium may also be a storage medium readable by other devices. Optionally, the above storage medium may be a non-transitory storage medium, which is not limited to herein. The above storage medium may also be a transitory storage medium.

The disclosure also provides a program product. When the program product is executed by the communication device 8100, the communication device 8100 is caused to implement any one of the above methods. Optionally, the above program product is a computer program product.

The disclosure also provides a computer program. When the computer program is running on a computer, the computer is caused to implement any one of the above methods.

In the above embodiments, the functions may be fully or partially implemented by software, hardware, firmware, or any combination thereof. When implemented by software, the functions may be implemented in whole or in part in the form of a computer program product. The computer program product includes one or more computer programs. Procedures or functions according to embodiments of the disclosure are fully or partially generated when the computer program is loaded and executed on a computer. The computer may be a general-purpose computer, a special-purpose computer, a computer network, or other programmable device. The computer program may be stored in a computer-readable storage medium or transmitted from one computer-readable storage medium to another. For example, the computer program may be transmitted from one website, computer, server, or data center to another via wire (such as a coaxial cable, a fiber optic, a digital subscriber line (DSL)) or wireless (such as infrared, wireless, microwave). The computer-readable storage medium may be any available medium that may be accessed by a computer or a data storage device such as a server that integrates one or more of the available media, and a data center. The readable medium may be a magnetic medium (such as a floppy disk, a hard disk and a magnetic tape), an optical medium (such as a digital video disk (DVD)), a semiconductor medium (such as a solid state disk (SSD)), or the like.

Corresponding relationships indicated by tables in the disclosure may be configured or predefined. A value of information in the tables is only an example, and may be configured as other values, which is not limited in the disclosure. When corresponding relationships between information and parameters are configured, it is not always necessary to configure all corresponding relationships indicated in the tables. For example, in the tables in the disclosure, the corresponding relationships indicated by some rows may not be configured. For another example, appropriate transformations and adjustments, such as splitting and merging, may be made based on the above tables. Names of parameters shown in headers in the tables may be other names understandable by the communication apparatus, and values or representations of the parameters may be other values or representations understandable by the communication apparatus. When the above tables are implemented, other data structures may be used, and for example, arrays, queues, containers, stacks, linear lists, pointers, linked lists, trees, graphs, structures, classes, heaps or hash tables may be used.

Predefined in the disclosure may be understood as defined, pre-defined, stored, pre-stored, pre-negotiated, pre-configured, solidified or pre-burned.

Those skilled in the related art may realize that units and algorithm steps of the examples described in embodiments of the disclosure may be implemented by electronic hardware or a combination of electronic hardware and computer software. Whether the functions are executed by hardware or software depends on a specific application and a design constraint of the technical solutions. Those skilled in the art may adopt different methods for each specific application to implement the described functions, but such implementation should not be considered as going beyond the scope of the disclosure.

Those skilled in the related art may clearly understand that, for a specific working process of a system, an apparatus and a unit described above, reference may be made to a corresponding process in the above method embodiments, which will not be repeated herein.

The above are only implementations of the disclosure. However, the protection scope of the disclosure is not limited here. Changes and substitutions that may be easily considered by those skilled in the art shall be contained within the protection scope of the disclosure. Thus, the protection scope of the disclosure shall be subject to the protection scope of claims.

## Claims

1. A method for network handover, performed by a terminal, comprising:
receiving first information sent from a first network device,
wherein the first information indicates cell information of one or more second network devices, and a network type covered by the first network device is different from a network type covered by the second network device.

2. The method according to claim 1, wherein the first network device is a non-terrestrial network (NTN) device, the second network device is a terrestrial network (TN) device, and the first information comprises at least one of:
a cell identifier of the TN device, an access threshold of the TN device, or a type of measurement to be performed on the TN device.

3. The method according to claim 1, wherein the first network device is a terrestrial network (TN) device, the second network device is a non-terrestrial network (NTN) device, and the first information comprises at least one of:
a satellite identifier of the NTN device, ephemeris information of the NTN device, an access threshold of the NTN device, or a type of measurement to be performed on the NTN device.

4. The method according to any one of claims 1 to 3, further comprising:
receiving second information sent from the first network device, wherein the second information comprises configuration information for the terminal to perform measurement on the second network device;
obtaining a measurement result of the second network device by performing measurement on the second network device based on the second information; and
sending the measurement result to the first network device.

5. The method according to any one of claims 1 to 4, further comprising:
determining, based on the first information, a target network device from the one or more second network devices.

6. The method according to claim 4, further comprising:
disconnecting a communication connection with the first network device, and establishing a communication connection with the target network device.

7. A method for network handover, performed by a first network device, comprising:
sending first information to a terminal,
wherein the first information indicates cell information of one or more second network devices, and a network type covered by the first network device is different from a network type covered by the second network device.

8. The method according to claim 7, wherein the first network device is a non-terrestrial network (NTN) device, the second network device is a terrestrial network (TN) device, and the first information comprises at least one of:
a cell identifier of the TN device, an access threshold of the TN device, or a type of measurement to be performed on the TN device.

9. The method according to claim 7, wherein the first network device is a terrestrial network (TN) device, the second network device is a non-terrestrial network (NTN) device, and the first information comprises at least one of:
a satellite identifier of the NTN device, ephemeris information of the NTN device, an access threshold of the NTN device, or a type of measurement to be performed on the NTN device.

10. The method according to any one of claims 7 to 9, further comprising:
sending second information to the terminal, wherein the second information comprises configuration information for the terminal to perform measurement on the second network device; and
receiving a measurement result sent from the terminal, wherein the measurement result is obtained by the terminal performing measurement on the second network device based on the second information.

11. The method according to any one of claims 7 to 10, further comprising:
determining a link state between the first network device and the terminal.

12. The method according to claim 11, further comprising:
sending a first request to the second network device,
wherein the first request indicates the second network device to perform admission control for a conditional handover and to allocate resources for the terminal.

13. The method according to claim 12, further comprising:
receiving third information sent from the second network device,
wherein the third information indicates a result of the admission control for the conditional handover performed by the second network device, and the third information comprises cell information of the second network device permitted to be accessed by the terminal.

14. The method according to claim 13, further comprising:
receiving fourth information sent from a target network device,
wherein the target network device is determined by the terminal from the second network devices, and the fourth information indicates the first network device to release resources for communication with the terminal.

15. The method according to claim 14, further comprising:
sending fifth information to a third network device,
wherein the third network device is a second network device other than the target network device, and the fifth information indicates the third network device to release reserved resources.

16. A terminal, comprising:
a transceiver module, configured to receive first information sent from a first network device,
wherein the first information indicates cell information of one or more second network devices, and a network type covered by the first network device is different from a network type covered by the second network device.

17. A first network device, comprising:
a transceiver module, configured to send first information to a terminal,
wherein the first information indicates cell information of one or more second network devices, and a network type covered by the first network device is different from a network type covered by the second network device.

18. A communication device, comprising: a transceiver; a memory; and a processor respectively connected to the transceiver and the memory, configured to control wireless signal transmission and reception of the transceiver by executing computer-executable instructions stored in the memory, and enable the method according to any one of claims 1 to 15 to be implemented.

19. A computer storage medium, storing computer-executable instructions which, when executed by a processor, enable the method according to any one of claims 1 to 15 to be implemented.

20. A communication system, comprising a terminal, configured to perform the method according to any one of claims 1 to 6, and a first network device, configured to perform the method according to any one of claims 7 to 15.

21. The communication system according to claim 20, further comprising a second network device.

22. The communication system according to claim 21, wherein the second network device is configured to perform:
receiving a first request sent from the first network device;
based on the first request, performing admission control for a conditional handover and allocating resources for the terminal.

23. The communication system according to claim 22, wherein the second network device is configured to perform:
sending third information to the first network device,
wherein the third information indicates a result of the admission control for the conditional handover performed by the second network device, and the third information comprises cell information of the second network device permitted to be accessed by the terminal.

24. The communication system according to claim 23, wherein the second network device, as a target network device, is configured to perform:
sending fourth information to the first network device,
wherein the target network device is determined by the terminal from the second network device, and the fourth information indicates the first network device to release resources for communication with the terminal.

25. The communication system according to claim 24, wherein the second network device, as a third network device, is configured to perform:
receiving fifth information sent from the first network device; and
releasing reserved resources based on the fifth information,
wherein the third network device is a second network device other than the target network device.
